# EUROPÄISCHE PATENTSCHRIFT

(11) **EP 1 173 274 B1**
(45) Veröffentlichungstag und Bekanntmachung des Hinweises auf die Patenterteilung: **22.11.2006**
(21) Anmeldenummer: 00906329.8
(22) Anmeldetag: 15.02.2000
(51) Int. Cl.: B01J 19/00, B01J 8/04, B01J 12/00, C01B 3/32, C01B 3/38, C01B 3/58

(54) **VERFAHREN ZUM BETRIEB EINER ANLAGE ZUR WASSERDAMPFREFORMIERUNG VON KOHLENWASSERSTOFFEN ODER METHANOL**
METHOD FOR OPERATING A SYSTEM FOR THE WATER VAPOR REFORMATION OF HYDROCARBONS, ESPECIALLY METHANOL
PROCEDE POUR FAIRE FONCTIONNER UN DISPOSITIF DE REFORMAGE A LA VAPEUR D'EAU D'HYDROCARBURES, NOTAMMENT DE METHANOL

(30) Priorität: 27.04.1999 DE 19918997
(43) Veröffentlichungstag der Anmeldung: 23.01.2002
(73) Patentinhaber: NuCellSys GmbH, 73230 Kirchheim/Teck-Nabern (DE)
(72) Erfinder: BRAUCHLE, Stefan, D-88400 Biberach/Riss (DE); WOLFSTEINER, Matthias, D-91793 Alesheim (DE)
(74) Vertreter: Finkele, Rolf
(86) Internationale Anmeldenummer: PCT/EP2000/001225
(87) Internationale Veröffentlichungsnummer: WO 2000/064576

(56) Entgegenhaltungen:
- EP-A- 0 798 798
- EP-A- 0 813 262
- DE-C- 19 623 919

## Beschreibung

Die vorliegende Erfindung betrifft ein Verfahren zum Betrieb einer Anlage zur Wasserdampfreformerierung von Kohlenwasserstoffen oder Methanol nach dem Oberbegriff des Patentanspruchs 1.

Mit derartigen Verfahren werden beispielsweise mobile Anlagen zur Wasserdampfreformierung von Methanol in brennstoffzellenbetriebenen Kraftfahrzeugen betrieben, um Wasserstoff für die Speisung der Brennstoffzellen zu gewinnen.

Zum Betrieb derartiger Anlagen ist es bekannt, die in einen Reformierungsreaktor eingeleitete Menge an aufbereitetem Wasserdampf/Methanol-Gemisch abhängig vom Lastzustand der Anlage variabel einzustellen. In der DE-AS 19 49 184 und der DE 21 57 722 C2 ist zu diesem Zwecke, mit der Modifikation, daß dort Methan anstelle von Methanol verwendet wird, eine Strahlpumpe vorgesehen, deren Dampfdurchfluß in Abhängig von dem Lastzustand der Anlage eingestellt wird, wodurch sich bei Lastwechsel auch der Methanzufluß entsprechend der Strahlpumpencharakteristik ändert. Aus der DE 196 23 937 C1 ist es bekannt, das Wasserdämpf/Methanol-Mischungsverhältnis des in einen Reformierungsreaktor eingeleiteten Wasserdampf/Methanol-Gemisches unbeeinflußt von kurzzeitigen Lastwechselvorgängen auf einem vorgebbaren Sollwert zu halten. Dies vermeidet unerwünschte, kurzzeitige Erhöhungen der CO-Konzentration im Reformat aufgrund eines zu geringen Wasseranteils im Wasserdampf/Methanol-Gemisch. Eine Sensorik bzw. eine Steuer- oder Regeleinheit zur Regelung des Wasserdampf/Methanol-Mischungsverhältnisses auf den Sollwert ist hierbei stromaufwärts von dem Reformierungsreaktor angeordnet.

Aus der DE 196 23 919 C1 ist ein Verfahren zum Betrieb einer Anlage zur Wasserdampfreformierung von Methanol bekannt, bei welchem das Wasserdampf/Methanol-Mischungsverhältnis des in den Reformierungsreaktor eingeleiteten Wasserdampf/Methanol-Gemisches abhängig vom Lastzustand und/oder Laständerungen der Anlage derart eingestellt wird, daß eine über den gesamten Lastbereich hinweg gleichbleibende CO-Konzentration im Reformat erhalten wird. Ein sensor, mittels dessen die Steuer- oder Regeleinheit ein den Lastzustand beschreibendes Signal erhält, ist hierbei stromabwärts von dem Reformierungsreaktor angeordnet.

Aus der EP 0 798 798 A2 ist eine Anlage mit einer Gemischbereitungsstufe und einem Reformierungsreaktor bekannt, welcher einen Reformer und eine CO-Oxidationsstufe aufweist, wobei Mittel zur Einstellung des Wasserdampf/Kohlenwasserstoff-Mischungsverhältnisses des dem Reformierungsreaktor zugeführten Wasserdampf/Kohlenwasserstoff-Gemisches enthalten sind. Zwischen Reformer und CO-Oxidationsstufe ist ein Sensor zur Bestimmung der Temperatur des aus dem Reformer austretenden Reformatgasstroms vorgesehen, wobei eine Steuereinheit in Abhängigkeit der ermittelten Temperatur die in den Reformer zugeführtre Luftmenge anpaßt.

Aus der DE 198 47 211 C1 ist ein Verfahren zum Betreiben einer Vorrichtung zur Erzeugung von wasserstoffreichem Gas bekannt, bei welchem eine katalytische Wasserdampfreformierung eines Wasserstoff/Brennstoff-Gemisches unter Zufuhr von Wärmeenergie in einem Reformer durchgeführt wird, und in einer CO-Oxidationsstufe eine selektive katalytische Oxidation von Kohlenmonoxid aus dem wasserstoffreichen Gas durchgeführt wird, wobei eine Übertragung von Wärmeenergie aus der CO-Oxidationsstufe in den Reformer stattfindet. Bei diesem Verfahren wird vor oder in der CO-Oxidationsstufe ein sauerstoffhaltiges Gas in einer vorgegebenen Menge zum Gasgemischstrom zugeführt, wobei die Menge des zugeführten sauerstoffhaltigen Gases in Abhängigkeit von der Temperatur des Gasgemischstromes am Ausgang der Reformer/CO-Oxidationsstufe eingestellt wird.

Sämtlichen beschriebenen Verfahren ist gemeinsam, daß die vorgesehenen Regelungsmaßnahmen im wesentlichen das Problem betreffen, einen möglichst gleichmäßigen Betrieb einer Anlage zur wasserdampfreformierung auch bei dynamischen Lastwechseln zur Verfügung zu stellen. Eine Langzeitregelung, welche alterungsbedingte Änderungen der Charakteristika der Reaktorkomponenten berücksichtigt, ist mit diesen Maßnahmen nicht möglich.

Aufgabe der Erfindung ist daher eine möglichst einfache und unaufwendige Langzeitregelung eines Reformierungsreaktors.

Diese Aufgabe wird gelöst durch ein Verfahren mit den Merkmalen des Patentanspruchs 1.

Durch Steuerung der Eduktzusammensetzung, d.h. des Wasser/Kohlenwasserstoff- oder Wasserdampf/Methanol-Verhältnisses, ist es in einfacher Weise möglich alterungsbedingten Änderungen der Wirksamkeit bzw. der Funktionsfähigkeit der Reaktorkomponenten, insbesondere eine alterungsbedingten Verschiebung des Temperaturprofils im Reaktorbett, entgegenzusteuern. Durch Erniedrigung des Wasseranteils erhält man am Eintritt einer einem Reformer nachgeschalteten CO-Oxidationsstufe eine höhere CO-Konzentration, wodurch ein insgesamt gleichmäßigeres Temperaturprofil erreicht wird. Hierdurch kann in wirksamer Weise einer Alterung des Reformers bzw. des CO-Oxidators entgegengewirkt werden.

Dabei wird die Temperatur des aus dem Reformierungsreaktor austretenden Gasstroms mittels der Einstellung des Wasserdampf/Kohlenwasserstoff- oder Wasserdampf/Methanol-Mischungsverhältnisses auf einen konstanten Wert geregelt. Hierdurch ist es in einfacher Weise möglich, die Reformierungsparameter des Reformierungsreaktors über eine sehr lange Zeitdauer konstant zu halten.

Die Erfindung wird nun anhand der beigefügten Zeichnung weiter erläutert. In dieser zeigt:

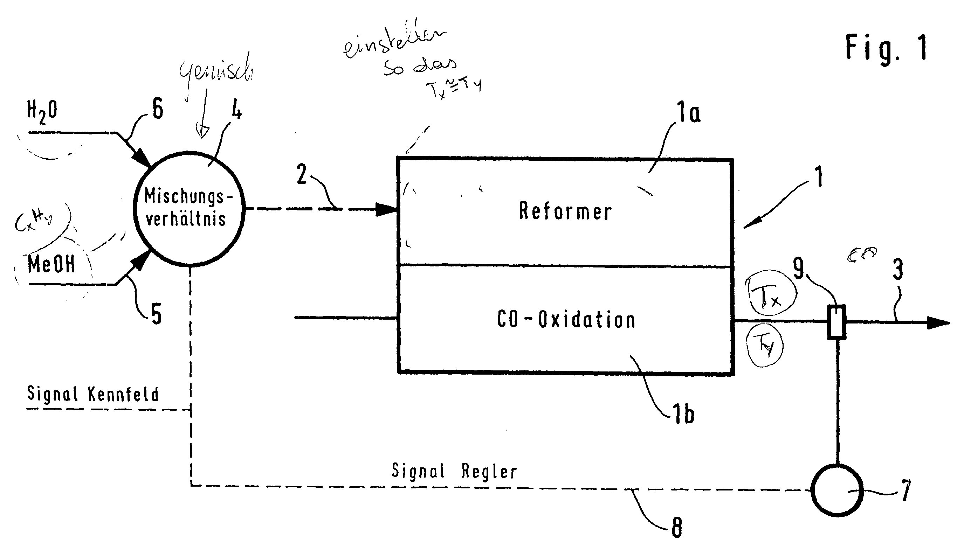

- Fig. 1: ein schematisches, stark vereinfachtes Blockdiagramm einer Anlage zur Wasserdampfreformierung von Methanol.

Die in Fig. 1 nur mit ihren vorliegend relevanten Komponenten gezeigte Anlage zur Wasserdampfreformierung von Methanol ist beispielsweise in einem brennstoffzellenbetriebenen Kraftfahrzeug einsetzbar, um Wasserstoff für die Speisung der Brennstoffzellen bereitzustellen. Die Anlage weist einen Reformierungsreaktor 1 auf, der aus einem eingangsseitig zugeführtem Wasserdampf/Methanol-Gemisch 2 ein Reformat 3 erzeugt und abgibt, das den gewünschten Wasserstoff enthält. Das Reformat 3 tritt als Gasstrom aus dem Reformierungsreaktor 1 aus. Zur Vermeidung, daß dem Reformat 3 ein unerwünschter Anteil an Kohlenmonoxid beigefügt ist, welcher beispielsweise eine nachgeschaltete PEM-Brennstoffzellenanordnung vergiften könnte, ist einem Reformer 1a des Reformierungsreaktors 1 eine CO-Oxidationsstufe 1b nachgeschaltet, in welcher Kohlenmonoxid in Kohlendioxid umwandelbar ist.

Das in den Reformierungsreaktor 1 eingeleitete Wasserdampf/Methanol-Gemisch 2 wird in einer Gemischbereitungsstufe 4 hergestellt, wozu dieser Stufe 4 über eine Methanolzuführungsleitung 5 Methanol und über eine Wasserzuführungsleitung 6 Wasser zugeführt wird. Dabei können zuerst die flüssigen Komponenten gemischt und dann zusammen verdampft bzw. überhitzt oder alternativ zunächst die beiden Bestandteile getrennt verdampft und anschließend gemischt werden. Der Betrieb der Anlage wird von einer Steuer- oder Regeleinheit 7 gesteuert. Der Aufbau des Reformierungsreaktors 1, der Gemischbereitungsstufe 4 und der Steuer- oder Regeleinheit 7 entspricht hierbei herkömmlichen Realisierungen dieser Komponenten, so daß hierauf nicht näher eingegangen zu werden braucht.

Wie beispielsweise aus dem Stand der Technik bekannt ist, sind der Reformer 1a, in welchem eine endotherme Reaktion stattfindet, und die CO-Oxidationsstufe 1b, in welcher eine exotherme Reaktion stattfindet, direkt miteinander gekoppelt. Eine Luftzudosierung, welche beispielsweise dem Wasserdampf/Methanol-Gemisch 2 zugebbar ist, ist nicht im einzelnen dargestellt.

Die Steuer- und Regeleinheit 7 empfängt, beispielsweise über einen Sensor 9, ein Temperarursignal, welches die Temperatur des aus dem Reformierungsreaktor 1 auftretenden Reformat- bzw. Gasgemischstromes darstellt. Entsprechend dem ermittelten Temperatursignal gibt die Steuer- oder Regeleinheit 7 über eine Leitung 8 ein Signal an die Gemischbereitungsstufe 4, durch welches das Mischungsverhältnis des von der Gemischbereitungsstufe 4 erzeugten Eduktstromes (Wasser/Methanol-Verhältnis) variierbar ist.

Beispielsweise kann mittels der Gemischbereitungsstufe 4 eine Erniedrigung des Wasserdampf/Methanol-Verhältnisses (Erhöhung des Methanolanteils) bewirkt werden. Eine derartige Erniedrigung des Wasserdampf/Methanol-Verhältnisses führt dazu, daß am Ausgang des Reformers 1a eine höhere CO-Konzentration vorliegt. Ursache hierfür ist das Wassergas-Shift-Gleichgewicht.

CO + H₂O ←→ CO₂ + H₂.

Diese erhöhte CO-Konzentration liegt somit am Eingang der CO-Oxidationsstufe 1b vor. Insgesamt verschiebt sich hierdurch das Temperaturprofil des Gesamtsystems Reformer - CO-Oxidationsstufe stromabwärts, d.h. das Temperaturprofil verschiebt sich im vorderen Teil des Gesamtsystems zu niedrigeren, im hinteren Teil des Gesamtsystems zu höheren Temperaturen. Insgesamt wird hierdurch ein gleichmäßigeres Temperaturprofil erreicht, wodurch Alterungseffekte, welche bei herkömmlichen Reaktoren auftraten, wesentlich vermindert werden können. Durch die beschriebene Erniedrigung des Wasser/Methanol-Verhältnisses kann ferner der Systemwirkungsgrad wirksam erhöht werden.

Mit der erfindungsgemäßen Vorgehensweise ist es insbesondere möglich, eine alterungsbedingte Verschiebung des Temperaturprofils des Gesamtsystems (alterungsbedingte Verschiebung des Temperaturprofils zur Eingangsseite hin) wirksam zu kompensieren. Wird nämlich durch die Steuer- oder Regeleinheit 7, welche insbesondere als Temperaturcontroller ausgebildet sein kann, eine niedrigere Temperatur des aus der CO-Oxidationsstufe 1b austretenden Gasgemisches festgestellt, welche für die alterungsbedingte Verschiebung des Temperaturprofils charakteristisch ist, kann durch entsprechende Änderung des Mischungsverhältnisses in der Gemischbereitungsstufe 4 dieser Temperaturerniedrigung an der Ausgangsseite des Systems entgegengewirkt werden, wie bereits beschrieben wurde. Die alterungsbedingte Verschiebung des Temperaturprofils bewirkt insbesondere eine Beeinträchtigung der Umsatzleistung der beiden Reaktorkomponenten, d.h. des Reformers 1a sowie der CO-Oxidationsstufe 1b. Insgesamt stellen daher die Steuer- oder Regeleinheit 7, die Gemischbereitungsstufe 4, der Reaktor 1 sowie der Temperatursensor 9 einen Regelkreis zur Regelung des aus der CO-Oxidationsstufe bzw. dem Reaktor 1 austretenden Gasgemisches dar.

## Patentansprüche

1. Verfahren zum Betrieb einer Anlage zur Wasserdampfreformierung von Kohlenwasserstoffen oder Methanol, bei dem in einer Gemischbereitungsstufe (4) aus Wasser und wenigstens einem Kohlenwasserstoff oder Methanol ein Gemisch bereitet und das bereitete Gemisch in einen Reformierungsreaktor (1) mit Reformer (1a) und Co-Oxidationsstufe (1b) eingeleitet wird,
**dadurch gekennzeichnet, dass**
das Wasserdampf/Kohlenwasserstoff- oder Wasserdampf/Methanol-Mischungsverhältnis des in den Reformierungsreaktor (1) eingeleiteten in Abhängigkeit von der Temperatur des aus der CO-Oxidationsstufe (1b) austretenden Reformatgasstroms dermaßen eingestellt wird, dass
die Temperatur (T) des aus dem Reformierungsreaktor (1) austretenden Reformatgasstroms mittels der Einstellung des Wasserdampf/ Kohlenwasserstoff- oder Wasserdampf/Methanol-Mischungsverhältnisses auf einen konstanten Wert geregelt wird.

## Claims

1. Method for operating a plant for the steam reforming of hydrocarbons, or methanol, in which, in a mixture-preparation stage (4), a mixture is prepared from water and at least one hydrocarbon or methanol, and the prepared mixture is introduced into a reforming reactor (1) with a reformer (1a) and a CO oxidation stage (1b), **characterized in that** the steam/hydrocarbon or steam/methanol mixing ratio of the mixture which has been introduced into the reforming reactor (1) is set as a function of the temperature of the reformate gas stream emerging from the CO oxidation stage (1b) such that the temperature (T) of the reformate gas stream emerging from the reforming reactor (1) is regulated to a constant value by setting the steam/hydrocarbon or steam/methanol mixing ratio.

## Revendications

1. Procédé en vue du fonctionnement d'une installation pour le reformage à la vapeur d'eau d'hydrocarbures ou de méthanol, lors duquel, dans une étape d'apprêt de mélange (4), on prépare, à partir d'eau et d'au moins un hydrocarbure, un mélange d'hydrocarbures ou de méthanol et lors duquel on introduit le mélange préparé dans un réacteur de reformage (1), ayant un reformeur (1a) et une étape de co-oxydation (1b), **caractérisé en ce que** le rapport de mélange vapeur d'eau/hydrocarbure ou vapeur d'eau/méthanol du mélange introduit dans le réacteur de reformage (1) est réglé en fonction de la température du courant de gaz de reformat sortant de l'étape de co-oxydation (1b) de ce dernier, de telle sorte que la température (T) du courant de gaz de reformat sortant du réacteur de reformage (1) est réglée par l'intermédiaire de l'ajustage du rapport de mélange vapeur d'eau/hydrocarbure ou vapeur d'eau/méthanol.
